Europäisches Patentamt

European Patent Office

Office européen des brevets

(19)

(11) Numéro de publication: **0 341 207**

**A1**

(12) **DEMANDE DE BREVET EUROPEEN**

(21) Numéro de dépôt: 89810315.5

(22) Date de dépôt: 26.04.89

(51) Int. Cl.⁴: **B 23 B 13/12**

(30) Priorité: 27.04.88 CH 1571/88

(43) Date de publication de la demande:
08.11.89 Bulletin 89/45

(84) Etats contractants désignés: **CH DE FR LI**

(71) Demandeur: **von Niederhäusern, Francis**
**55, rue Centrale**
**CH-2740 Moutier (CH)**

(72) Inventeur: **von Niederhäusern, Francis**
**55, rue Centrale**
**CH-2740 Moutier (CH)**

(74) Mandataire: **Tordion, Serge**
**c/o I C B Ingénieurs Conseils en brevets S.A. Passage**
**Max Meuron 6/8**
**CH-2001 Neuchâtel (CH)**

(54) **Canon de guidage pour tour automatique à poupée mobile.**

(57) Le canon de guidage comprend une couronne de rouleaux (3) tenus par une cage (4) dans un chemin de roulement (5) élastique. Un cône de serrage (6), en s'engageant autour du chemin de roulement (5) presse les rouleaux (3) contre la barre de matière en cours d'usinage. En dévissant le manchon de commande (19), tout en empêchant la rotation du tube (24), qui porte une bague de butée (10), un extracteur (16), solidaire du manchon de commande (19) et du cône de serrage (16) dégage mécaniquement et à force ce dernier du chemin de roulement (5), ce qui libère la barre de matière.

Fig. 1

EP 0 341 207 A1

**Description**

## CANON DE GUIDAGE POUR TOUR AUTOMATIQUE A POUPEE MOBILE

La présente invention a pour objet un canon de guidage pour tour automatique à poupée mobile, en particulier un canon de guidage du type dans lequel la barre de matière en cours d'usinage est destinée à tourner dans une couronne de rouleaux qui peuvent être pressés contre elle par un cône de serrage qui agit sur la face externe conique du chemin de roulement élastique des rouleaux en s'engageant entre cette face et l'alésage d'une chemise externe du canon.

Dans les canons connus de ce type, le cône de serrage est dégagé du chemin de roulement des rouleaux par des organes élastiques. Ceux-ci doivent agir toutes les fois que le serrage de la barre par le canon doit être relâché pour permettre à la barre de se déplacer librement à tavers le canon. C'est le cas, en particulier, à la fin de l'usinage d'une barre de matière, lorsqu'il s'agit d'éliminer le reste de cette barre.

Comme l'angle d'ouverture des surfaces coniques du chemin de roulement des rouleaux et du cône de serrage est petit (14° à 16°), ce dernier se coince fortement entre le chemin de roulement des rouleaux et la chemise externe du canon, de sorte qu'il faut une grande force pour le dégager. Les seuls moyens élastiques capables de déployer la force nécessaire dans l'espace à disposition sont constitués par des anneaux légèrement bombés. La déformation de ces anneaux est cependant très faible. Même en empilant le plus grand nombre possible de ces anneaux dans la longueur de l'espace disponible dans un canon, ils ne déplacent le cône de serrage que sur une infime distance. Il s'ensuit que le chemin de roulement des rouleaux ne s'ouvre, au plus, que de un à deux centièmes de millimètre.

Un premier inconvénient de ces canons connus est qu'il en faut un jeu considérable pour usiner des barres de différents diamètres. Un tel canon ne peut, en effet, plus être utilisé avec des barres dont le diamètre est de un à deux centièmes plus fort ou plus faible que celui de la barre à laquelle il est destiné. Même avec cette dernière barre, des problèmes se posent, quand il s'agit d'en extraire du tour le reste devenu inutilisable. A ce moment-là, la pince de la broche de poupée est ouverte; la barre de matière ne tourne donc plus et il est alors malaisé d'en faire coulisser le reste à travers un canon à peine ouvert.

A ces derniers problèmes des canons connus s'en ajoute encore un autre dans le cas des tours équipés d'un embarreur automatique. Il arrive, en effet, que la bavure produite autour de la barre de matière par l'outil à tronçonner bute contre la face frontale des rouleaux, ce qui augmente la résistance opposée par le canon au recul de la barre, au point que la liaison entre celle-ci et le poussoir, trop sollicitée, cède. Au lieu d'emmener le reste de barre avec lui, le poussoir recule seul. En obstruant le chemin d'une nouvelle barre, le reste de l'ancienne empêche la suite des opérations du tour.

Il convient aussi de remarquer qu'en raison du léger jeu axial des rouleaux, la barre, en reculant, tend, dans un premier temps, à entraîner ces rouleaux et leur chemin de roulement avec elle, ce qui fait rentrer ce chemin de roulement dans le cône de serrage.

Enfin, en dépit de leur force, les anneaux bombés n'arrivent pas toujours à dégager le cône de serrage, quand il devrait permettre l'ouverture du canon.

La présente invention vise à créer un canon exempt des inconvénients susmentionnés. Le canon selon l'invention parvient à ce résultat, grâce à un extracteur agencé de façon à pouvoir dégager mécaniquement et à force le cône de serrage du chemin de roulement des rouleaux, que des moyens de butée retiennent (revendication 1).

Un tel extracteur peut manifestement retirer le cône de serrage assez loin pour permettre une pleine expansion du chemin de roulement des rouleaux, dont l'élasticité peut l'ouvrir de un à deux dixièmes de millimètre en diamètre. Le même canon peut ainsi être utilisé avec des barres dont les diamètres varient dans cette même plage.

Le canon selon l'invention s'ouvre suffisamment pour laisser la barre coulisser librement, même si elle ne tourne pas, et éviter l'accrochage des bavures formées sur les restes de barre, lors de leur retrait. En raison de l'action mécanique à force de l'extracteur, le cône de serrage doit absolument le suivre et ne peut pas rester coincé entre le chemin de roulement des rouleaux et la chemise externe du canon. Une butée empêche naturellement ce chemin de roulement de reculer avec le cône de serrage.

Les formes spéciales d'exécution définies par la revendication 2 ont l'avantage d'assurer le dégagement du cône de serrage avec un couple relativement faible.

Celles définies par la revendication 3 permettent une exécution et un montage aussi simple que fiable de l'extracteur.

Quant à celles définies par la revendication 4, elles permettent une commande automatique de l'ouverture et de la fermeture du canon.

Le tube défini par la revendication 5 constitue un moyen de butée simple pour empêcher le chemin de roulement des rouleaux de suivre le cône de serrage, quand celui-ci est dégagé.

Les formes spéciales d'exécution définies par la revendication 6 ont l'avantage de faciliter l'assemblage des composants du canon et leur fabrication.

Dans celles définies par la revendication 7, le chemin de roulement des rouleaux ne s'ouvre pas seulement jusque dans sa position naturelle, il est forcé de s'ouvrir au-delà de cette position.

La revendication 8 définit des moyens de commande du dit tube aussi simples qu'efficaces.

En respectant les conditions définies par la revendication 9, on obtient une parfaite synchronisation des commandes de l'ouverture et de la fermeture du chemin de roulement des rouleaux.

Enfin, les formes spéciales d'exécution définies par la revendication 10 ont l'avantage de réduire au maximum les contraintes génératrices de fatigue du chemin de roulement des rouleaux.

Une forme d'exécution du canon selon l'invention est représentée schématiquement et à simple titre d'exemple au dessin annexé, dans lequel:

la Fig. 1 en est une vue en élévation, la moitié supérieure étant coupée radialement;

la Fig. 2 est une vue représentant le canon à échelle réduite et muni d'un mécanisme de commande automatique;

la Fig. 3 est une vue en coupe de ce dispositif de commande selon la ligne III-III de la Fig. 4, et

la Fig 4 est une vue de ce dispositif de commande depuis l'arrière du canon, une partie étant arrachée.

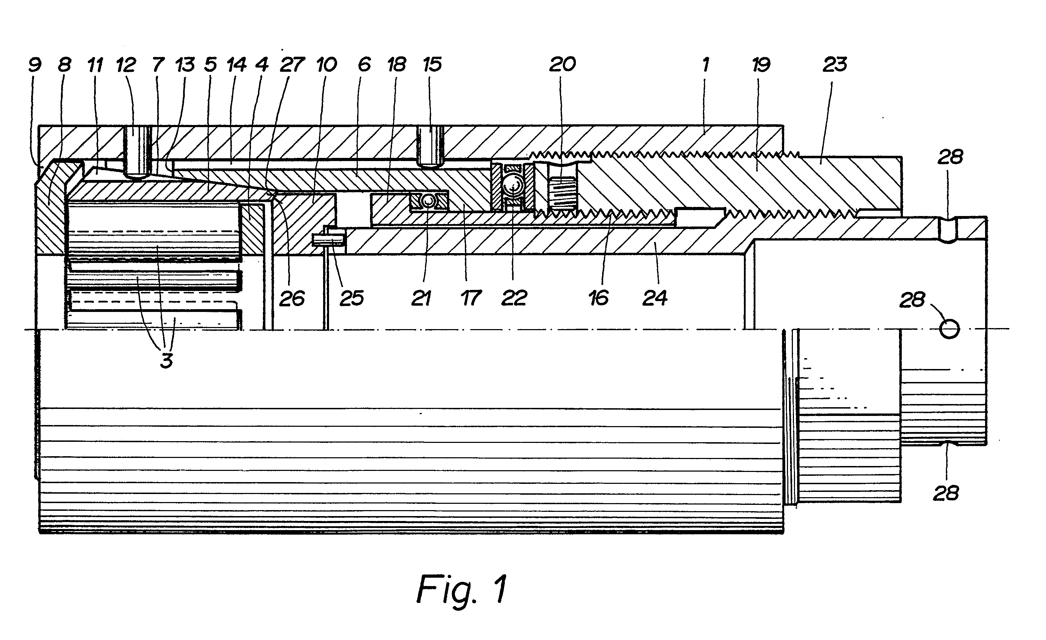

Le canon de guidage représenté à la Fig. 1 est enveloppé dans une chemise externe 1 destinée à être fixée dans un alésage du support vertical 51 du tour (non représenté). Ce canon tient fermement, à proximité immédiate des outils, une barre de matière 2, entraînée en rotation par la poupée (non représentée) du tour. A cet effet, il comprend une couronne de rouleaux 3, qui sont emprisonnés dans une cage 4, logés dans un chemin de roulement 5 et pressés par celui-ci contre la barre 2 sous l'action d'un cône de serrage 6. Le chemin de roulement 5 est rendu élastique par une fente (non représentée) oblique par rapport à son axe et qui s'étend sur toute sa longueur. La Fig. 1 montre que le cône de serrage 6 est coincé entre la chemise 1 et la face externe 7, conique, du chemin de roulement 5 des rouleaux 3.

Ces derniers sont retenus axialement en place dans la cage 4 par une bague 8, qui est elle-même maintenue dans la chemise 1 par un rebord interne 9 de celle-ci. Une autre bague, 10, faisant office de butée, emprisonne axialement le chemin de roulement 5 et la cage 4 dans la par tie antérieure du canon, cette cage, toutefois, avec un certain jeu. Le chemin de roulement 5 présente une rainure axiale 11 dans laquelle plonge un prisonnier 12 planté à travers la chemise 1, pour immobiliser ce chemin de roulement en rotation. Le prisonnier 12 passe à travers une encoche 13 du cône de serrage 6. Une rainure axiale 14 est pratiquée de même le long du cône de serrage 6 et un prisonnier 15, planté également dans la chemise 1, plonge dans cette rainure 14, pour immobiliser le cône de serrage 6 en rotation.

Vu que les angles de la face externe 7 du chemin de roulement 5 et de la face correspondante du cône de serrage 6 avec l'axe du canon, compris généralement entre 7° et 8°, sont relativement petits, le cône de serrage 6 est fortement coincé entre la chemise 1 et le chemin de roulement 5. Aussi faut-il une grande force pour dégager le cône de serrage 6, afin de permettre au chemin de roulement 5 de s'ouvrir et aux rouleaux 3 de libérer la barre 2.

Dans le canon de guidage selon l'invention, le cône de serrage 6 est dégagé mécaniquement et à force par un extracteur 16. A cet effet, le cône de serrage 6 présente un rebord annulaire interne 17 à son extrémité postérieure, qui se trouve derrière un rebord annulaire externe 18 de l'extracteur 16. Ce dernier est vissé dans un manchon 19 et bloqué par une vis 20. Le manchon 19 est lui-même vissé dans la chemise 1.

Le dégagement du cône de serrage 6 s'opère naturellement en dévissant le manchon 19. En se déplaçant alors vers la droite dans la Fig. 1, le manchon 19 entraîne l'extracteur 16 et par conséquent le cône de serrage 6 avec lui. L'engagement du cône de serrage 6 s'effectue, bien sûr, en revissant le manchon 19 dans la chemise 1. Comme le manchon 19 et l'extracteur 16 tournent au cours du dégagement et de l'engagement du cône de serrage, tandis que ce dernier est immobilisé en rotation par le prisonnier 15, des butées à billes 21, 22 sont insérées de part et d'autre du rebord 17 du cône de serrage 6. La partie 23 du manchon 19, qui fait saillie à l'arrière de la chemise 1, a une forme polygonale, pour permettre d'actionner ce manchon 19 en rotation.

Le canon de guidage représenté comprend encore un tube 24, qui est vissé dans le manchon 19. Ce tube 24 est relié à la bague 10 par des goupilles, dont une seule, 25, est représentée à la Fig. 1. Une face co nique 26 est formée à l'angle antérieur externe de la bague 10. Cette face 26 appuie contre une face correspondante 27, formée à l'extrémité postérieure du chemin de roulement 5. En vissant le tube 24 dans le manchon 19, lorsque le cône de serrage 6 est complètement dégagé, la coopération des faces coniques 26 et 27 force le chemin de roulement 5 à s'ouvrir, même au-delà de sa position de repos naturelle.

Les opérations de vissage et dévissage du manchon 19 dans la chemise 1 est celles de vissage et dévissage du tube 24 dans le manchon 19 peuvent être synchronisées aisément. Il suffit pour cela que le pas des filets d'engagement du tube 24 dans le manchon 19 soit légèrement supérieur à celui des filets d'engagement de ce manchon 19 dans la chemise 1, cela dans une mesure qui est fonction des tangentes des angles des deux faces coniques 7 et 27 du chemin de roulement 5. En dévissant le manchon 19 à partir de la position représentée à la Fig. 1, tout en empêchant le tube 24 de tourner, ce dernier avance davantage que ne reculent le manchon 19 et l'extracteur 16. Si le chemin de roulement 5 ne s'ouvrait pas en raison de son élasticité de sa position fermée jusqu'à sa position de repos, la bague 10 le forcerait à s'ouvrir. Lorsque le cône de serrage 6 recule davantage, la face conique 16 de la bague 10 force le chemin de roulement 5 à s'ouvrir au-delà de sa position de repos naturelle.

L'ouverture du chemin de roulement 5, forcée par la bague 10, a non seulement pour effet de libérer la barre 2 de manière satisfaisante, mais, en outre, de réduire les contraintes génératrices de fatigue de ce chemin de roulement. L'immobilisation en rotation du tube 24 pendant le dévissage et le vissage du manchon 19 s'effectue, en commande manuelle, grâce à des trous diamétraux 28, qui sont percés à travers la paroi de la partie du tube 24 en saillie à l'arrière du manchon 19. Le tube 24 est alors immobilisé en rotation en enfilant, par example, une tige dans l'un de ces trous.

On remarquera que les composants appartenant spécifiquement au canon de guidage décrit (extracteur, manchon 19 et tube 24) ont des formes simples; leur fabrication est donc aisée. Quant aux autres composants de ce canon, ils se trouvent déjà dans les canons connus. L'assemblage des composants du canon décrit ne présente aucune difficulté. La bague 8, les rouleaux 3, leur cage 4 et leur chemin de roulement 5 sont mis en place dans la partie antérieure de la chemise 1. Séparément, l'extracteur 16, muni de la butée à billes 21 est glissé dans le cône de serrage 6, depuis l'avant de celui-ci. Ensuite, la butée à billes 22 est glissé sur l'extracteur 16 et amenée contre le rebord 17 du cône de serrage 6. Le manchon 19 peut alors être vissé sur l'extracteur 16, de façon à bloquer les butées à billes 21 et 22 contre le rebord 17 du cône de serrage 6, entre l'extrémité antérieure du manchon 19 et le rebord 18 de l'extracteur 16. Lorsque le manchon 19 a été vissé à fond sur l'extracteur, la vis 20 est serrée, de façon à solidariser entre eux le cône de serrage 6, l'extracteur 16 et le manchon 19.

Le tube 24 est alors introduit dans ces trois pièces, depuis l'arrière, et vissé dans le manchon 19. Enfin, la bague 10 est posée contre l'extrémité antérieure du tube 24. L'ensemble ainsi constitué est alors introduit dans la chemise 1, en l'orientant de façon que le prisonnier 15 entre dans la rainure 14. Le manchon 19 est ensuite vissé dans la chemise 1. Lorsque le cône de serrage 6 est arrivé en position de fermeture du chemin de roulement 5, il faut encore veiller qu'il y ait un très léger jeu entre les faces coniques 26 et 27, respectivement de la bague 10 et du chemin de roulement 5. Le canon ainsi assemblé est alors prêt à l'emploi.

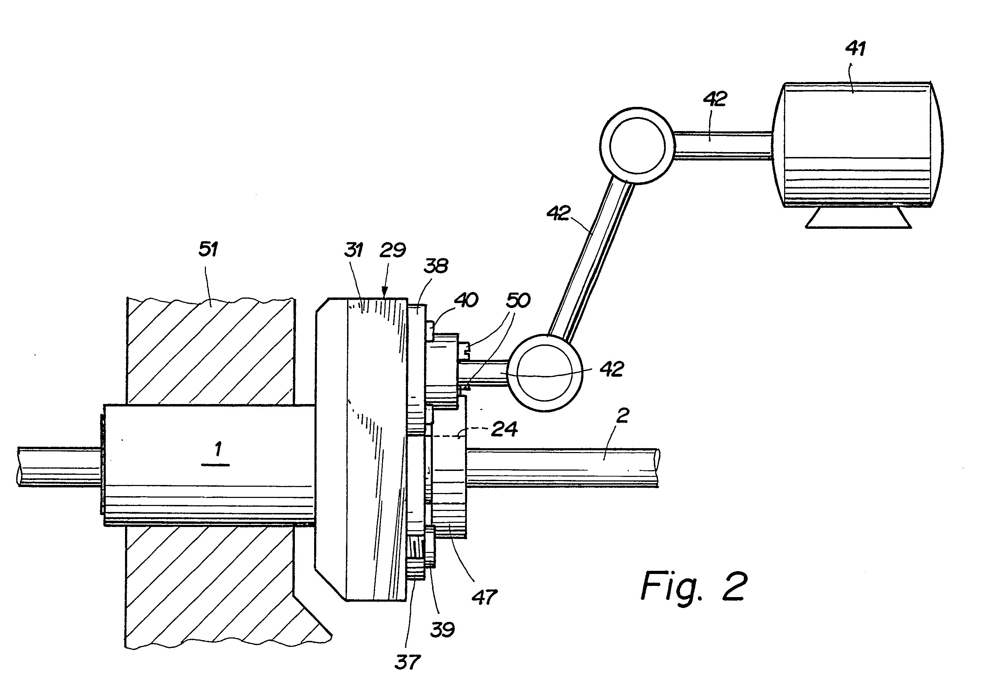

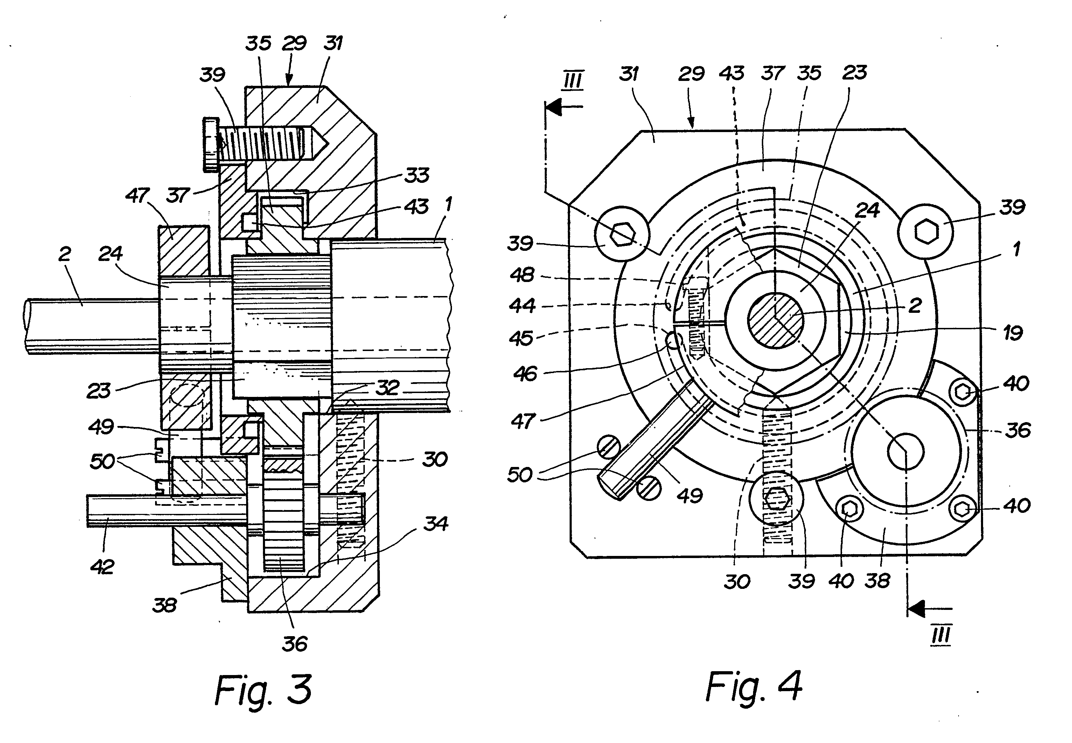

L'ouverture et la fermeture du canon décrit peuvent être commandées automatiquement par le mécanisme représenté aux Fig. 2 à 4. Ce mécanisme comprend un boîtier 29 fixé à la partie saillante de la chemise 1 par des vis, dont une seule, 30, est représentée aux Fig. 3 et 4. Le boîtier 29 comprend un corps 31, dans lequel sont aménagés, outre l'ouverture 32, par laquelle le corps 31 est engagé sur la chemise 1, deux logements circulaires 33, 34. Le logement 33 reçoit une couronne dentée 35 et le logement 34 un pignon 36. La couronne 35 est solidaire de la partie polygonale 23 du manchon 19 et le pignon 36 est en prise avec la couronne 35. Le logement 33 est fermé par un couvercle 37 et le logement 34 l'est par un couvercle 38. Le couvercle 37 est fixé au corps 31 par trois vis 39 à six pans creux, engagées directement dans le corps 31 et dont une partie de la tête repose sur le couvercle 37. Le couvercle 38 est fixé de même au corps 31 par trois vis 40 à six pans creux.

Le pignon 36 est entraîné à partir d'un moteur 41, par l'intermédiaire d'une transmission à cardan 42. Une rainure annulaire 43 est creusée dans la face interne du couvercle 37. Elle s'étend d'une extrémité 44 à une autre extrémité 45, ces deux extrémités étant voisines l'une de l'autre. La couronne dentée 35 porte un plot 46 sur sa face tournée vers le couvercle 37. Ce plot 46 plonge dans la rainure 43. Il s'ensuit que la couronne 35 et par conséquent le manchon 19 ne peuvent tourner que d'un angle un peu inférieur à 360°, entre les extrémités 44, 45 de la rainure 43, qui tiennent lieu de butées.

Lors de la mise en train du tour, on introduit une barre de matière 2 du lot à usiner dans le canon représenté. On visse ensuite le manchon 19 dans la chemise 1 jusqu'au moment où les rouleaux 3 enserrent la barre 2 dans la mesure désirée. Puis on détend les vis 39, si ce n'est pas déjà fait, de manière à pouvoir faire tourner le couvercle 37 autour de l'axe du canon. L'extrémité 45 de la rainure 43 est alors amenée contre le plot 46, puis les vis 39 sont resserrées à fond.

Ainsi, chaque fois que le moteur 41 aura ouvert le canon, en amenant le plot 46 de l'extrémité 45 de la rainure 43 contre l'extrémité 44 de cette rainure, et le refermera ensuite, il l'amènera toujours exactement dans la même position de fermeture, tout au long de l'usinage du lot de barres prévu, à moins que le tour ne soit arrêté entretemps pour un nouveau réglage.

Si le pas des filets du manchon 19 et de la chemise 1 est, par exemple, de un millimètre, le recul du cône de serrage 6, en vue d'ouvrir le canon, permet au chemin de roulement 5 des rouleaux 3 de s'ouvrir un peu plus de 2,6 dixièmes de millimètre en diamètre, avec un angle d'ouverture des faces coniques du chemin de roulement 5 et du cône de serrage 6 de 15°.

L'immobilisation en rotation du tube 24 est réalisée au moyen d'une bride 47 serrée par une vis 48 sur la partie saillante de ce tube 24. Un bras 49 est solidaire de la bride 47 et ce bras est emprisonné entre deux vis 50.

On remarquera que le dispositif décrit pour commander automatiquement l'ouverture et la fermeture du canon n'occupe pas beaucoup de place en direction axiale, puisqu'il ne dépasse pas le tube 24. Il n'écourte donc que fort peu l'avance de la poupée en direction du canon. En outre, le mécanisme de transmission à cardan 42 n'entrave pas l'avance de la poupée jusqu'à proximité du tube 24, puisque ce mécanisme aboutit au pignon 36, qui est déporté hors du champ de la poupée.

Au lieu du mécanisme de transmission à cardan 42 représenté et décrit, un câble Bowden pourrait aussi relier le moteur 41 au pignon 36.

## Revendications

1. Canon de guidage pour tour automatique à poupée mobile, dans lequel la barre de matière en cours d'usinage est destinée à tourner dans une couronne de rouleaux qui peuvent être pressés contre elle par un cône de serrage qui agit sur la face externe conique du chemin de roulement élastique des rouleaux en s'engageant entre cette face et l'alésage d'une chemise externe du canon, caractérisé par un extracteur (16) agencé de façon à pouvoir dégager mécaniquement et à force le cône de serrage (6) du chemin de roulement (5) des rouleaux (3) que des moyens de butée (10, 24) retiennent.

2. Canon selon la revendication 1, caractérisé en ce que l'extracteur (16) est solidaire d'un manchon (19) vissé dans la chemise externe (1) du canon.

3. Canon selon la revendication 2, caractérisé en ce que le cône de serrage (6) présente un rebord annulaire (17) qui est emprisonné axialement entre un rebord annulaire (18) de l'extracteur (16) et l'extrémité antérieure du dit manchon (19), des moyens antifriction (21, 22) étant logés de part et d'autre du rebord (17) du cône de serrage (6).

4. Canon selon la revendication 3, caractérisé en ce que l'extrémité postérieure (23) du dit manchon (19) fait saillie de la chemise externe (1) du canon et porte une couronne dentée (35) pour commander ce manchon (19) en rotation.

5. Canon selon la revendication 2, 3 ou 4, caractérisé en ce que les dits moyens de butée (10, 24) comprennent un tube (24) qui est disposé à l'intérieur du dit manchon (19) pour empêcher le chemin de roulement (5) des rouleaux (3) de suivre le cône de serrage (6), pendant que celui-ci est dégagé.

6. Canon selon la revendication 5, caractérisé en ce que le dit tube (24) agit sur le chemin de roulement (5) des rouleaux (3) par l'intermédiaire d'une bague (10) insérée entre le dit chemin de roulement (5) et le dit tube (24).

7. Canon selon la revendication 6, caractérisé en ce que la dite bague (10) présente une surface conique (26) par laquelle elle entre en contact avec une surface conique (27) correspondante du chemin de roulement (5) des rouleaux (3) et en ce que des moyens de synchronisation font avancer le dit tube (24) au fur et à mesure que le cône de serrage (6) est dégagé et le font reculer au fur et à mesure que le cône de serrage (6) est engagé.

8. Canon selon la revendication 7, caractérisé en ce que le dit tube (24) est immobilisé en rotation et en ce que les dits moyens de synchronisation sont constitués par le fait que le dit tube (24) est vissé dans le dit manchon (19) par un filet dont le pas est légèrement supérieur à celui du filet entre le dit manchon (19) et la chemise externe (1) du canon.

9. Canon selon la revendication 8, caractérisé en ce que les pas des filets entre le dit tube (24) et le dit manchon (19) et entre ce manchon et la dite chemise (1) diffèrent d'une valeur qui est fonction des angles des surfaces coniques (26) de la dite bague (10) et du cône de serrage (6) avec l'axe du canon.

10. Canon selon la revendication 7, 8 ou 9, dans lequel le dit chemin de roulement (5) des rouleaux (3) est fendu obliquement par rapport à son axe, sur toute sa longueur, caractérisé en ce que sa position au repos est comprise entre celle dans laquelle il est fermé par le cône de serrage (6) et celle dans laquelle il est ouvert par la dite bague (10), sous l'action du dit tube (24).

Fig. 1

Fig. 2

Fig. 4

Fig. 3



# RAPPORT DE RECHERCHE EUROPEENNE

Office européen des brevets

Numero de la demande

EP 89 81 0315

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-1 905 695 (HABEGGER) <br> * Page 3, lignes 8-18; page 4, lignes 1-14; figure 1 * <br> --- | 1 | B 23 B 13/12 |
| Y | FR-A-2 087 257 (ETAT FRANCAIS) <br> * Page 2, lignes 30,31; figure 35 * <br> --- | 1 | |
| A | CH-A- 471 632 (HABEGGER) <br> --- | 1,2,6 | |
| A | CH-A- 327 386 (NEUKOMM) <br> ----- | | |

DOMAINES TECHNIQUES RECHERCHES (Int. Cl.4)

B 23 B 13/00
B 23 B 31/00

Le présent rapport a été établi pour toutes les revendications

| Lieu de la recherche | Date d'achèvement de la recherche | Examinateur |
|---|---|---|
| LA HAYE | 04-08-1989 | BOGAERT F.L. |

EPO FORM 1503 03.82 (P0402)